**Europäisches Patentamt**

**European Patent Office**

**Office européen des brevets**

(19)

(11) Veröffentlichungsnummer: **0 192 163
B1**

(12)

# EUROPÄISCHE PATENTSCHRIFT

(45) Veröffentlichungstag der Patentschrift:
**11.10.89**

(51) Int. Cl.⁴: **A47J 37/10**

(21) Anmeldenummer: **86101702.8**

(22) Anmeldetag: **11.02.86**

(54) **Abdeckhaube für Brat- und Kochgerätschaften.**

(30) Priorität: **19.02.85 DE 3505630**

(43) Veröffentlichungstag der Anmeldung:
**27.08.86 Patentblatt 86/35**

(45) Bekanntmachung des Hinweises auf die Patenterteilung:
**11.10.89 Patentblatt 89/41**

(84) Benannte Vertragsstaaten:
**AT BE CH DE FR GB IT LI LU NL SE**

(56) Entgegenhaltungen:
**DE-A- 2 608 976
DE-U- 8 324 805
FR-E- 39 155
US-A- 1 627 099
US-A- 2 385 594
US-A- 2 428 894
US-A- 2 559 196
US-A- 3 439 603
US-A- 3 937 210**

(73) Patentinhaber: **Speker, Karl J., Schickhardtstrasse 19,
D-7000 Stuttgart 1(DE)**

(72) Erfinder: **Speker, Karl J., Schickhardtstrasse 19,
D-7000 Stuttgart 1(DE)**

(74) Vertreter: **Witte, Alexander, Dr.-Ing., Witte, Weller &
Hilgenfeldt Patent- und Rechtsanwälte
Augustenstrasse 7, D-7000 Stuttgart 1(DE)**

## Beschreibung

Die Erfindung betrifft eine Abdeckhaube für Brat- und Kochgerätschaften mit einem Haubenteil, bei der die Abdeckhaube oben in einem auf der Gerätschaft aufsitzenden torusförmigen Kragen angeordnet ist, wobei der Kragen an seiner Außenseite mit einem hochstehenden Rand und an seiner Unterseite mit einer Rinne versehen ist, wobei das Haubenteil durch Halter im Höhenabstand über der Rinne und im Seitenabstand neben dem hochstehenden Rand gehalten wird.

Eine Abdeckhaube der vorstehend genannten Art ist aus der FR-E 39 155 bekannt.

Es ist bekannt, zum Abdecken von Brat- und Kochgerätschaften, insbesondere von Bratpfannen, Töpfen und Kesseln, Abdeckhauben zu verwenden, die im wesentlichen zwei Zwecken dienen sollen.

Zum einen sollen die Abdeckhauben einen Schutz gegen Fettspritzer darstellen, zum anderen sollen die Abdeckhauben aber auch die Temperatur an der Oberseite des zuzubereitenden Fleischstücks erhöhen, um die Zubereitungsdauer zu vermindern. Es wird hierdurch auch Energie eingespart.

Verwendet man beispielsweise auf einer Bratpfanne eine allseits dichtende Abdeckhaube, werden die beiden genannten Zwecke zwar erreicht, weil infolge der geschlossenen Abdeckhaube keine Fettspritzer nach außen dringen können und sich innerhalb der Haube auch eine verhältnismäßig hohe Temperatur einstellt, eine solche allseits geschlossene Abdeckhaube führt jedoch zu unbefriedigenden geschmacklichen Resultaten.

Beim Erhitzen des Fleisches tritt nämlich das im Fleisch gebundene Wasser als Dampf aus dem Fleisch aus und vermischt sich mit dem ebenfalls teilweise verdampfenden, teilweise verspritzenden Fett zu den sogenannten Wrasen. Werden diese Wrasen nun innerhalb einer geschlossenen Abdeckhaube gehalten, befindet sich die Oberseite des Fleischstücks unter dem Einfluß des eingeschlossenen Wasserdampfes. Statt der angestrebten knusprigen Oberfläche des Fleisches erhält man demzufolge eine weiche und schwammige Konsistenz, so daß sich die mit einer geschlossenen Abdeckhaube erzielbaren praktischen Vorteile aufgrund der damit verbundenen geschmacklichen Nachteile nicht auszahlen.

Die aus der eingangs genannten FR-E 39 155 bekannte Abdeckhaube weist ein kugelkappenförmiges flaches Haubenteil auf, das im vertikalen Abstand über dem torusförmigen Kragen mittels hochstehender schmaler Blechlaschen gehalten wird, die mit dem Kragen vernietet sind. Es ist aus dieser Druckschrift nicht erkennbar, ob das Haubenteil mit dem Kragen fest verbunden oder nur lose auf die Halter aufgesetzt ist.

In jedem Falle wird zwar durch den seitlichen Abstand und auch durch den Höhenabstand zwischen Haubenteil und Kragen eine gewisse Luftzufuhr zur Unterseite des Haubenteils erzielt, das Haubenteil selbst ist jedoch sehr flach ausgebildet, so daß die Wrasen, die sich an der Unterseite des Haubenteils in Tropfenform niederschlagen, von dort wieder abtropfen und auf das zuzubereitende Fleischstück fallen.

Wenn man ferner einmal davon ausgeht, daß bei dieser bekannten Abdeckhaube das Haubenteil mit dem Kragen fest verbunden ist, so wäre die Abdeckhaube insgesamt nur sehr schwer zu reinigen, weil der Zwischenraum zwischen Haubenteil und Kragen praktisch nicht zugänglich ist. Geht man andererseits davon aus, daß die beiden Teile nur lose miteinander verbunden sind, so würde dies eine sehr instabile Anordnung darstellen, weil das Haubenteil nur auf drei Punkten, nämlich den genannten Blechlaschen aufliegt. Außerdem wäre von Nachteil, daß beim Abheben des Haubenteils von den Blechlaschen noch mehr von den kondensierten Tropfen an der Unterseite des Haubenteiles ablaufen und auf das zuzubereitende Fleisch fallen würden. Ein Anheben des Haubenteils ist bei dieser bekannten Abdeckhaube jedoch unerläßlich, weil das Haubenteil offensichtlich aus Metall besteht und das zuzubereitende Fleisch während der Zubereitung nicht beobachtet werden kann. Das Haubenteil muß daher von Zeit zu Zeit abgehoben werden, um den Garungszustand des Fleisches zu überwachen.

Schließlich ist die Unterseite des Kragens nur mit einem sehr schmalen umgebördelten Rand versehen, so daß die von diesem Rand gebildete Rinne nur ein äußerst geringes Fassungsvolumen für die kondensierten Wrasen aufweist. Bei der bekannten Abdeckhaube ist dies deswegen ohne größere Bedeutung, weil aufgrund der sehr flachen Ausbildung der Abdeckhaube – wie erwähnt – die kondensierten Wrasen ohnehin nicht zur Seite hin ablaufen können und daher die genannte Rinne ohnehin nicht gefüllt wird.

Aus der US-A 1 627 099 ist ferner eine Abdeckhaube für Bratpfannen bekannt, bei der auf die Bratpfanne zunächst ein torusförmiges Kragenteil aufgesetzt wird, das mit einem eigenen Griff versehen ist. Das Kragenteil besteht aus zwei konzentrischen zylindrischen Blechwänden, die in der Höhe gegeneinander versetzt sind, wobei die innere zylindrische Blechwand unterhalb der äußeren angeordnet ist. Vom unteren Rand der äußeren zylindrischen Blechwand führt ein radialer Boden zur inneren zylindrischen Blechwand, so daß auf diese Weise zwischen den beiden Blechwänden eine umlaufene Rinne gebildet wird. Von oben ist in das Kragenteil ein kegelförmiges Haubenteil einsetzbar, das ebenfalls nach oben geschlossen ist. Der Außendurchmesser des Haubenteils ist gleich dem Innendurchmesser der äußeren zylindrischen Wand. Das Haubenteil ruht ebenfalls auf drei über den Umfang der äußeren zylindrischen Wand verteilten Nasen. Der durch das Haubenteil gebildete Kegel hat einen Steigungswinkel von etwa 30°.

Nachteil dieser bekannten Abdeckhaube ist, daß das geschlossene kegelförmige Haubenteil dicht auf dem Kragenteil und dieses wiederum dicht auf der Bratpfanne aufsitzt, so daß die Bratpfanne insgesamt nach oben abgeschlossen ist. Auf diese Weise ergeben sich die bereits eingangs geschilderten Nachteile durch den eingeschlossenen Wasserdampf.

Aus der US-A 984 318 ist eine weitere Abdeckhaube für Bratpfannen bekannt. Ein mehrfach geschwungenes Kragenteil sitzt an seinem Umfang dicht auf dem oberen Rand der Bratpfanne.

Auf dem oberen Umfang des Kragenteils sitzt, ebenfalls dicht, ein kegelstumpfförmiges Haubenteil. Mittels eines seitlich angebrachten Griffes kann das Haubenteil scharnierartig nach oben aufgeklappt werden, damit der Benutzer den Inhalt der Pfanne begutachten kann.

Diese bekannte Abdeckhaube hat den Nachteil, daß keinerlei Auffangrinne für an der Unterseite des Haubenteils oder des Kragenteils herablaufende Wrasen vorgesehen ist, so daß sich die eingangs geschilderten Nachteile des Standes der Technik in vollem Umfange einstellen.

Aus der DE-A 2 608 976 ist eine weitere Abdeckhaube bekannt, die als flacher Kegelstumpf ausgebildet ist und an der Spitze des Kegelstumpfes eine Öffnung aufweist. Der Außendurchmesser des unteren Randes der bekannten Abdeckhaube ist größer als der Durchmesser einer damit abzudeckenden Pfanne. Die Abdeckhaube wird demzufolge über den oberen Rand der Pfanne gestülpt, und sie liegt auf nasenförmigen Haltern auf, die seitlich aus den Außenwänden der Pfanne vorspringen. Zwischen Pfanne und Abdeckhaube verbleibt aufgrund der unterschiedlichen Durchmesser ein ringförmiger Spalt, durch den Luft von unten unter die Abdeckhaube dringen, sich unterhalb der Abdeckhaube mit den Wrasen vermischen und oben durch die Öffnung an der Spitze der Abdeckhaube wieder entweichen kann. Der untere Rand der bekannten Abdeckhaube ist nach innen umgebogen, so daß eine umlaufende Rinne entsteht, die zum Auffangen von an der Unterseite der Abdeckhaube kondensierten Wrasen dient, die nach unten in die Rinne herablaufen können.

Die bekannte Abdeckhaube hat jedoch verschiedene Nachteile:

Die umlaufende Rinne befindet sich nämlich außerhalb und unterhalb des Randes der überdeckten Pfanne, so daß Fettspritzer über den Pfannenrand herüberspritzen und infolge des seitlichen Zwischenraumes zwischen Pfannenrand und Abdeckhaubenrand auf die Herdplatte oder den Herd gelangen können. Zum anderen ist die bekannte Abdeckhaube mit etwa 28° Neigung des Kegelstumpfes ebenfalls verhältnismäßig flach ausgebildet, so daß an der Unterseite der Haube herablaufendes Kondensat dann, wenn sich mehrere Kondensattropfen vereinigen, von der Haube wieder heruntertropfen können. Geschieht dies im Bereich des seitlichen Spaltes zwischen Haube und Pfanne, tropft das Kondensat ebenfalls auf die Herdplatte bzw. den Herd.

Weiterhin ist bei der bekannten Abdeckhaube von Nachteil, daß spezielle Pfannen mit außen angesetzten nasenförmigen Halterungen vorgesehen sein müssen, weil dann, wenn solche Halterungen fehlen, die Abdeckhaube dichtend auf dem oberen Pfannenrand aufsitzen würde, wodurch sich die eingangs genannten Nachteile einstellen würden. Entsprechendes gilt für Töpfe und Grillplatten, d.h. in die Herdoberfläche eingelassene Platten, auf denen Fleischstücke unmittelbar und ohne Zuhilfenahme von Gefäßen gegrillt werden. Auch in diesen Fällen könnte die bekannte Abdeckhaube nicht verwendet werden, weil sie zwingend zusätzliche Halterungen voraussetzt. Aus diesem Grunde setzt die bekannte Abdeckhaube auch Pfannen oder Töpfe voraus, bei denen die seitlichen Griffe unterhalb des Pfannenrandes in die Pfanne münden, während bei modernen Pfannen häufig die Oberseite des Griffes mit dem Pfannenrand bündig ist.

Ein weiterer Nachteil der bekannten Abdeckhaube besteht darin, daß aufgrund der recht flachen Bauweise und der einstückig an ihren unteren Rand angeformten Rinne eine Reinigung der Abdeckhaube nur sehr schwer möglich ist. Dies ist deswegen besonders unangenehm, weil sich im Bereich der Rinne die herablaufenden kondensierten Wrasen sammeln und die darin enthaltenen Fett- und Fleischsaftbestandteile schnell zu einer nur sehr schwer löslichen Masse verkleben.

Schließlich hat sich noch als wesentlicher Nachteil derartiger Abdeckhauben herausgestellt, daß die gewünschte Luftbewegung "von unten", d.h. zwischen dem seitlichen Schlitz zwischen Rinne und Pfannenrand hindurch, nicht zu den gewünschten Resultaten führt.

Aus der DE-U 8 324 805 ist ferner eine Abdeckhaube bekannt, die im unteren Bereich hohlzylindrisch ausgebildet und oben mit einem kesselbodenförmigen Deckel überspannt ist. Diese bekannte Abdeckhaube ist mit nach innen weisenden Haken versehen, mittels derer sie auf Töpfe oder Pfannen aufgesetzt werden kann. Der Außendurchmesser dieser bekannten Abdeckhaube ist ebenfalls größer als der Durchmesser der Pfanne oder des Topfes, und die an den unteren Rand angeformte umlaufende Rinne befindet sich ebenfalls außerhalb und unterhalb des Pfannenrandes. Es stellen sich damit auch bei dieser bekannten Abdeckhaube im wesentlichen die oben im einzelnen genannten Nachteile ein.

Aus der DE-A 3 311 247 sind verschiedene Spritzschutzeinrichtungen für Kochgeschirre in kegelstumpfförmiger Gestalt bekannt, die jedoch nicht mit am unteren Rand angeordneten Auffangrinnen versehen sind.

Aus der US-A 3 937 210 ist eine Kondensierhaube zum Herstellen destillierten Wassers bekannt. Sie besteht ebenfalls aus einem torusförmigen Kragenteil mit einem rohrförmigen Auslaß, das auf einen kochendes Wasser enthaltenden Topf aufgesetzt wird. Das Kragenteil wird von einer kegelförmigen Abdeckhaube überdeckt, die mit drei über ihren Umfang verteilten Füßen auf dem Boden des Kragenteiles aufsitzt. Das Haubenteil ist an seiner Oberseite geschlossen, was auch beabsichtigt ist, weil mit der bekannten Abdeckhaube eine möglichst große Menge an kondensiertem, d.h. destilliertem Wasser hergestellt werden soll, das an der Innenseite des Haubenteiles abläuft, in die Rinne gelangt und von dort in den Auslaß fließt.

Aus der US-A 2 428 894 ist ein Deckel für Bratpfannen bekannt, der eine radkappenartige Form aufweist. Ein Mittelteil dieses Deckels kann wahlwerden, wobei in dem dann unteren Deckelteil eine umlaufende Rinne zum Auffangen von kondensiertem Fett dient.

Dieser bekannte Deckel ist jedoch außerordentlich kompliziert in der Formgebung und im Aufbau, kann kaum gereinigt werden, erlaubt keine Beobachtung des Bratgutes und ist schließlich aufgrund seiner Formgebung auch nicht geeignet, für eine gewisse Ventilation im Raum unterhalb des Deckels zu sorgen.

Eine aus der US-A 3 439 603 bekannte Abdeckhaube für Bratpfannen weist ebenfalls ein Haubenteil und ein Kragenteil auf, das Haubenteil ist jedoch extrem flach, im wesentlichen waagerecht, ausgebildet, so daß die meisten hochsteigenden und an der Unterseite des Haubenteiles kondensierenden Wrasen wieder auf das Bratgut zurückfallen werden.

Aus der US-A 2 559 196 ist ein weiterer Pfannendeckel bekannt, der mit einer Durchlaßöffnung für einen Rührlöffel versehen ist und ferner eine Entlüftungsöffnung aufweist. Zwar ist auch dieser Deckel mit einer am unteren Rand umlaufenden Rinne versehen, aufgrund der geschlossenen Bauweise ist jedoch eine Ventilation des Innenraumes unter dem Deckel weder möglich noch vorgesehen.

In der US-A 2 385 594 ist ein Deckel für einen Kochtopf beschrieben, der mittels Klammern in den Kochtopf eingehängt werden kann. Die Klammern sind S-förmig ausgebildet, wobei das obere Hakenteil dieser Klammern einen umlaufenden Bord an dem oberen Rand des Topfes umschließt, so daß die Klammer damit unverlierbar gehalten ist. Der Deckel ist von oben lose in das untere Hakenteil der Klammern eingesetzt.

Schließlich zeigt die DE-U 8 324 805 noch eine Abdeckhaube, bei der ebenfalls am inneren unteren Rand eine Auffangrinne für Fett und kondensierten Dampf vorgesehen ist, auch diese bekannte Abdeckhaube ist jedoch geschlossen und im Oberteil flach ausgebildet, so daß sich die bereits mehrfach erwähnten Nachteile hier ebenfalls einstellen.

Der Erfindung liegt demgegenüber die Aufgabe zugrunde, eine Abdeckhaube der eingangs genannten Art dahingehend weiterzubilden, daß die weiter oben im einzelnen geschilderten Nachteile vermieden werden. Insbesondere soll eine Abdeckhaube geschaffen werden, die bei optimaler Luftzirkulation das Herausspritzen von Fett sicher verhindert, gleichzeitig für eine Vielzahl von Brat- und Kochgerätschaften verwendet werden kann und schließlich leicht zu gebrauchen und insbesondere leicht zu reinigen ist.

Diese Aufgabe wird erfindungsgemäß dadurch gelöst, daß die Spitze des Haubenteils eine Öffnung aufweist, daß der Durchmesser der Öffnung kleiner als ein Fünftel und größer als ein Zwanzigstel des Durchmessers des unteren Randes ist, daß der Neigungswinkel der kegeligen Fläche des Haubenteiles zwischen 35° und 45° liegt, daß das Haubenteil aus einem lichtdurchlässigen Material besteht und daß das Haubenteil von oben in Haken eingesetzt ist, die S-förmig ausgebildet sind und mit ihrem unteren Hakenteil den unteren Rand des Haubenteils umfassen, wobei die unteren Hakenteile so ausgebildet sind, daß der untere Rand darin einklipsbar ist.

Die der Erfindung zugrundeliegende Aufgabe wird auf diese Weise vollkommen gelöst.

Die erfindungsgemäße Abdeckhaube kann für eine Vielzahl von Brat- und Kochgerätschaften verwendet werden, so für Töpfe, Kessel und Grillplatten.

Die Maßnahme, an der Spitze des Haubenteils eine Öffnung vorzusehen, hat dabei in Verbindung mit der vertikalen und horizontalen Beabstandung von Haubenteil und Kragen den Vorteil, daß sich unterhalb des Haubenteils eine kontrollierte Ventilation ausbildet, die gewährleistet, daß der unter dem Haubenteil vorhandene Dampf sich nicht negativ auf das Bratgut auswirken kann. Die angegebene Dimensionierung des Neigungswinkels der kegeligen Fläche hat dabei den Vorteil, daß in diesem Winkelbereich gewährleistet werden kann, daß die an der Unterseite des Haubenteiles kondensierenden Wrasen an dieser Unterseite seitlich nach unten in die Rinne ablaufen und nicht von der Unterseite weg nach unten auf das Bratgut tropfen können.

Die Ausbildung des Haubenteiles aus einem lichtdurchlässigen Material hat dabei den Vorteil, daß eine Beobachtung des Fleischstückes während der Zubereitung möglich ist, ohne daß das Haubenteil entfernt werden muß.

Schließlich hat die einklipsbare Ausführung des Haubenteiles den Vorteil, daß das Haubenteil auf diese Weise licht von oben in den Kragen eingesetzt werden kann, beispielsweise indem man mit dem Finger in die obere Öffnung des Haubenteiles greift oder aber mittels eines am Haubenteil angebrachten Griffes.

Die Demontage der erfindungsgemäßen Abdeckhaube kann auch einfach vollzogen werden, um die Haube nach Gebrauch zu reinigen. Die Einklipsbarkeit des Haubenteiles hat dabei ferner den Vorteil, daß man einen vorübergehenden mechanischen Zusammenhalt von Haubenteil und Kragen durch elastischen Formschluß erhält, der z.B. ausreichend sein kann, um mittels eines an dem Haubenteil angebrachten Griffes das Haubenteil zusammen mit dem Kragen von der Pfanne oder dem Topf abzunehmen. Zum Reinigen der Abdeckhaube kann dann das Haubenteil leicht aus dem Kragen ausgeklipst werden.

Bei einem Ausführungsbeispiel der Erfindung ist der Kragen an seiner Unterseite mit einem sich nach unten und nach innen verjüngenden schrägen Boden versehen.

Diese Maßnahme hat den Vorteil, daß aufgrund der Konizität des Bodens der Kragen auf Pfannen bzw. Töpfe unterschiedlichen Durchmessers aufgesetzt werden kann. Dies ist deswegen besonders wichtig, weil bei üblichen Brat- und Kochgerätschaften im allgemeinen lediglich der Durchmesser des Bodens genormt ist, der bestimmten Durchmessern von Herdplatten entsprechen muß, während sich aufgrund unterschiedlicher Neigungswinkel der Seitenwände derartiger Gerätschaften in beträchtlichen Bereichen schwankende Durchmesser der oberen Ränder ergeben. Bei dem konisch ausgebildeten Boden kann jedoch ein weiter Bereich derartiger Durchmesser mit einer Schwankungsbreite von mehreren Zentimetern überbrückt werden.

Bei diesem Ausführungsbeispiel kann bevorzugt der schräge Boden die äußere Begrenzung der im Querschnitt im wesentlichen dreieckförmigen Rinne bilden.

Diese Maßnahme hat den Vorteil, daß ein besonders einfacher Aufbau entsteht, weil an dem sich nach innen verjüngenden schrägen Boden lediglich noch weiter innen ein sich schräg nach oben verjüngender Ansatz angesetzt werden muß, um die gewünschte Auffangrinne zu erhalten.

Bei einem weiteren Ausführungsbeispiel der Erfindung ist der Kragen an seiner Unterseite mit einem nach unten weisenden zylindrischen Ansatz versehen.

Diese Maßnahme hat den Vorteil, daß beim Aufsetzen auf Pfannen und Töpfe der Kragen auf diese Weise sicher gegen seitliches Abrutschen oder Herunterstoßen gesichert werden kann, außerdem kann ein solcher Ansatz dazu dienen, um beim Aufsetzen auf Grillplatten einen Mindestabstand von der Platte selbst herzustellen.

Bei einem weiteren bevorzugten Ausführungsbeispiel der Erfindung wird der untere Rand des Haubenteils durch einen sich vom Rand des kegelförmigen Abschnittes nach unten erstreckenden zylindrischen Ansatz gebildet.

Diese Maßnahme hat den Vorteil, daß eine definierte Abtropflinie für die herabrinnenden kondensierenden Wrasen gebildet wird, die genau über der Auffangrinne positioniert werden kann.

Besonders bevorzugt ist noch ein Ausführungsbeispiel, bei dem die von der oberen Kante des hochstehenden Randes und der oberen, inneren Kante der Rinne definierte kegelförmige Fläche vom unteren Rand des Haubenteils berührt oder geschnitten wird.

Diese Maßnahme hat nämlich den wesentlichen Vorteil, daß es keine gerade "Flugbahn" durch den Zwischenraum zwischen Kragen und Haubenteil gibt, so daß ein Hindurchfliegen von Fettspritzern sicher vermieden werden kann. In den meisten Fällen würde es allerdings auch reichen, wenn der untere Rand des Haubenteiles noch einen geringfügigen Abstand von der genannten kegelförmigen Fläche hätte, weil Fettspritzer, die vom Boden der Pfanne her kommen, immer eine nach oben gekrümmte Flugbahn aufweisen.

Weiterhin ist eine Ausführungsform der Erfindung bevorzugt, bei der für unterschiedliche Durchmesser der Gerätschaften unterschiedliche Kragen mit entsprechenden Durchmessern vorgesehen sind, deren Rinnen und Halter so ausgebildet sind, daß auf alle Kragen dasselbe Haubenteil aufsetzbar ist.

Diese Maßnahme hat den Vorteil, daß auch bei großen Durchmesservariationen der oberen Ränder der zu benutzenden Gerätschaften immer nur ein und dasselbe Haubenteil verwendet werden kann. Es werden demzufolge nicht nur Kosten gespart, es ist darüberhinaus auch nur ein geringerer Lagerraum erforderlich.

Zusätzlich oder alternativ zur vorstehend genannten Variante kann für unterschiedliche Durchmesser der Gerätschaften das Haubenteil auch in einer waagerechten Ebene unterteilt sein, wobei an ein oberes Haubenteil gleichbleibender Größe ein kegelstumpfförmiges unteres Haubenteil angesetzt ist, dessen Bodendurchmesser dem jeweiligen Durchmesser der Gerätschaft entspricht.

Auch bei diesem Ausführungsbeispiel der Erfindung ergibt sich der Vorteil, daß immer ein und dasselbe obere Haubenteil verwendet werden kann.

Diese Variante kann dadurch weitergebildet werden, daß die Neigungswinkel der Mantelflächen beider Haubenteile gleich sind.

Auf diese Weise bleiben die vorteilhaften Wirkungen erhalten, wie sie für das einteilige Haubenteil bereits erläutert wurden.

Bei einer weiteren Variante dieses Ausführungsbeispieles besteht das obere Haubenteil aus einem lichtdurchlässigen Material und das untere Haubenteil aus Metall, vorzugsweise Kupfer oder Edelstahl.

Diese Maßnahme hat den Vorteil, daß insbesondere bei großen Abdeckhauben Kosten gespart werden können, weil das obere Haubenteil aus lichtdurchlässigem Material wesentlich teurer ist als das untere Haubenteil aus Kupfer oder Edelstahl. Es können daher derartige große Abdeckhauben zu vertretbaren Kosten hergestellt werden. Auch fallen nur begrenzte Kosten an, wenn eine derartige zweigeteilte Abdeckhaube versehentlich fallengelassen wird, weil dann allenfalls das obere, beispielsweise gläserne Haubenteil zerspringt, während das untere, metallene Haubenteil weiterverwendet werden kann.

Bei einer besonders bevorzugten Variante dieser Ausführungsform überlappt das obere Haubenteil im Ansetzbereich das untere Haubenteil über eine vorbestimmte Länge einer Fallinie, wobei die Haubenteile im Überlappungsbereich einen Zwischenraum vorbestimmter Höhe zwischen sich aufweisen.

Diese Maßnahme hat zum einen den Vorteil, daß auch im Bereich der Schnittebene zwischen den beiden Haubenteilen seitlich Luft unter das obere Haubenteil einströmen kann, so daß sich die Kaminwirkung der Abdeckhaube noch weiter verbessert.

Zum anderen hat diese Variante aber auch den Vorteil, daß sich für die an der Unterseite der Haubenteile herablaufenden kondensierten Wrasen definierte Wege einstellen, ohne daß sich im Bereich der Trennebene zwischen den Haubenteilen eine unerwünschte Abtropfkante bildet.

Schließlich sind noch Ausführungsbeispiele der Erfindung bevorzugt, bei denen das Haubenteil und/oder der Kragen mit einem Griff versehen sind.

Diese Maßnahme erleichtert die Handhabung der Abdeckhaube und das Vorsehen zweier Griffe an der Abdeckhaube und am Kragen erleichtert die Trennung der beiden Teile voneinander, insbesondere dann, wenn das Haubenteil in den Kragen eingeklipst ist.

Weitere Vorteile ergeben sich aus der Beschreibung der beigefügten Zeichnung.

Ausführungsbeispiele der Erfindung sind in der Zeichnung dargestellt und werden in nachfolgender Beschreibung näher erläutert. Es zeigen:

Fig. 1 eine perspektivische Ansicht einer Bratpfanne mit einer erfindungsgemäßen Abdeckhaube;

Fig. 2 die Anordnung gemäß Fig. 1 im Längsschnitt;

Fig. 3 eine Schnittdarstellung - in vergrößertem Maßstab - eines weiteren Ausführungsbeispiels zur Erläuterung des Zusammenwirkens zwischen Haubenteil und Kragen;

Fig. 4 eine Variante der Darstellung gemäß Fig. 3 zur Erläuterung der Halterung der Haube im Kragenteil;

Fig. 5 eine weitere Schnittdarstellung zur Erläuterung der Wirkungsweise der Gesamtanordnung;

Fig. 6 eine Darstellung wie Fig. 5, jedoch mit einem zweiteiligen Haubenteil.

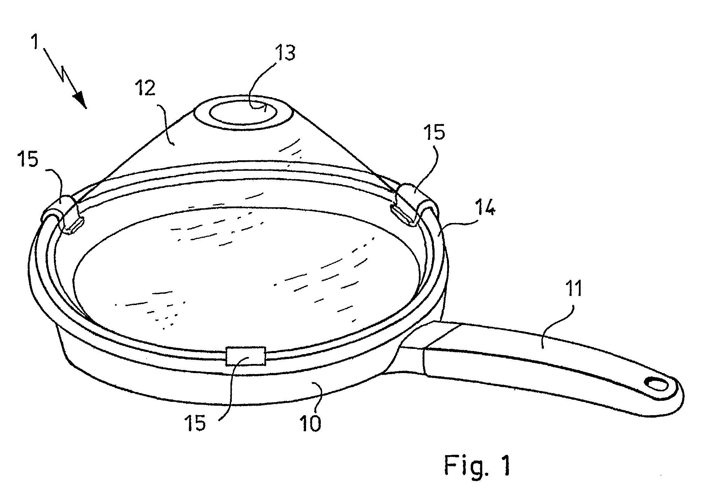

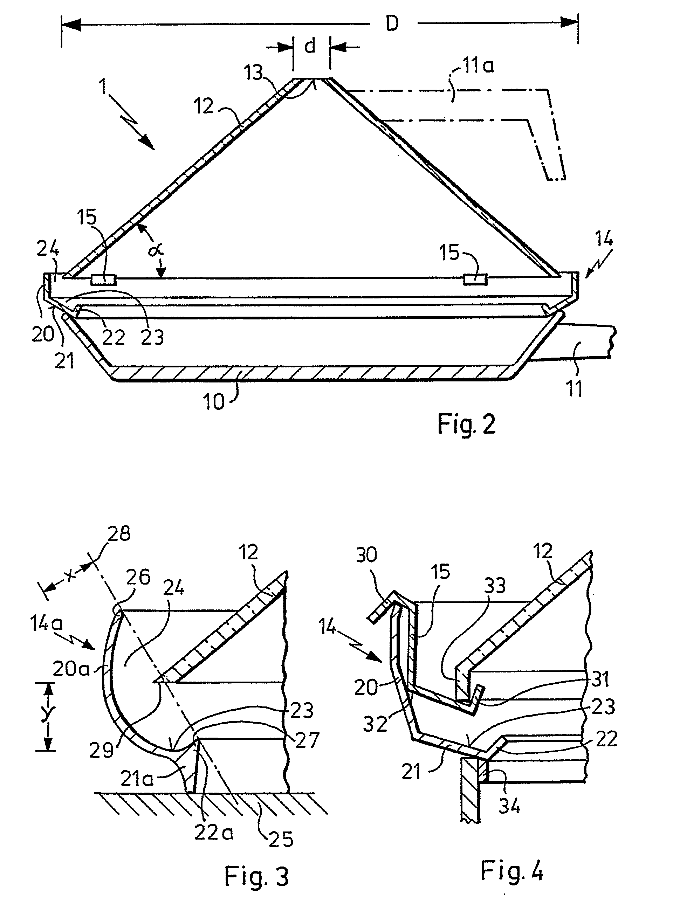

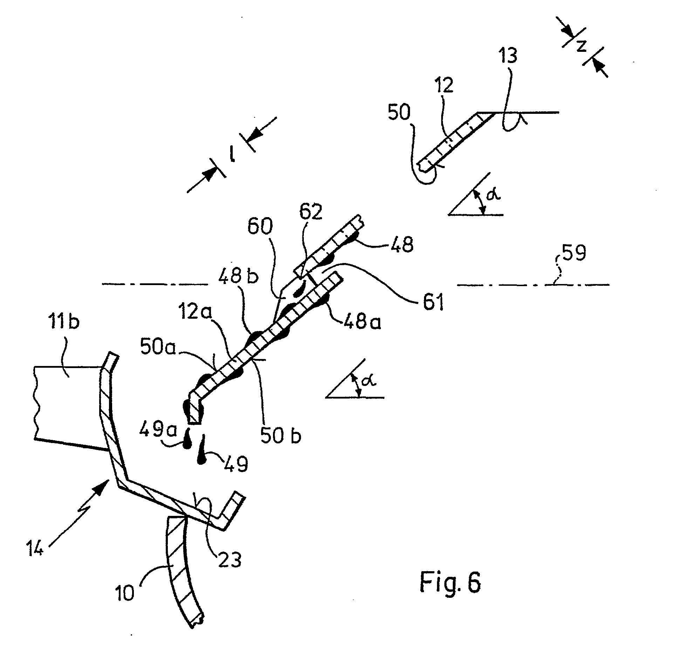

In Fig. 1 ist 10 eine Bratpfanne mit einem Griff 11 in üblicher Bauweise. Auf die Bratpfanne 10 ist eine Abdeckhaube 1 aufgesetzt, die aus einem Haubenteil 12 und einem Kragen 14 besteht. Das Haubenteil 12 ist kegelstumpfförmig ausgebildet und weist an seiner Spitze eine Öffnung 13 auf. Der Kragen 14 ist auf den oberen Rand der Bratpfanne 10 aufgesetzt, der folglich in Fig. 1 nicht zu erkennen ist. Über den Umfang des Kragens 14 verteilt sind mehrere Haken 15 angeordnet, in denen der untere Rand des Haubenteils 12 liegt. Weitere Griffe 11a, 11b können am Haubenteil 12 (Fig. 2) und/oder am Kragen 14 (Fig. 6) vorgesehen sein.

In der zur Fig. 1 gehörigen Schnittdarstellung gemäß Fig. 2 erkennt man den vorstehenden Sachverhalt nochmals im einzelnen.

Der Kragen 14 besteht aus drei Abschnitten, nämlich einem äußeren, hochstehenden Rand 20, einem schrägen Boden 21 und einem inneren, schrägen Ansatz 22. Der Rand 20 hat dabei eine hohlzylindrische Gestalt und der Boden 21 bzw. der Ansatz 22 sind kegelstumpfförmig ausgebildet.

Der Boden 21 bildet mit dem Ansatz 22 eine umlaufende Rinne 23.

Das Haubenteil 12 kann beispielsweise mittels eines Griffes 11a ergriffen und lose von oben in die Haken 15 eingesetzt werden. Der Außendurchmesser D des Haubenteiles 12 ist kleiner als der Durchmesser des hochstehenden Randes 20, jedoch größer als der lichte Innendurchmesser am Rande des Ansatzes 22. Es verbleibt demzufolge zwischen dem unteren Rand des Haubenteiles 12 und dem Kragen 14 ein Zwischenraum 24.

Der Durchmesser d der Öffnung 13 beträgt zwischen einem Fünftel und einem Zwanzigstel des Durchmessers D des Haubenteiles 12, beispielsweise beträgt d = 2 cm und D = 20 cm.

Der Neigungswinkel des Haubenteiles 12 beträgt zwischen 35 und 45°.

Für den Zwischenraum 24 sind Ausführungsbeispiele bevorzugt, bei denen der Höhenabstand y (vgl. Fig. 3) zwischen Haubenteil 12 und Rinne 23 etwa so groß ist, wie der Seitenabstand x zwischen Haube 12 und hochstehendem Rand 20, wobei diese Abstände zwischen einem Zehntel und einem Zwanzigstel des Durchmessers D des Haubenteiles 12 betragen. Beispielsweise ist x = y = 2 cm für D = 20 cm.

Fig. 3 zeigt - allerdings für ein leicht modifiziertes Ausführungsbeispiel - einen Ausschnitt aus dem Randbereich gemäß Fig. 2.

Man erkennt, daß der Kragen 14a aus einstückig ineinander übergehenden Elementen 20a, 21a, 22a besteht, wodurch jedoch die Funktion der Abdeckhaube nicht beeinträchtigt wird.

Außerdem zeigt Fig. 3, daß der Kragen 14a und damit die gesamte Abdeckhaube nicht nur auf Pfannen und Töpfe sondern auch auf eine Grillplatte 25 aufsetzbar ist, die großflächig ausgebildet ist und auf der ohne Zuhilfenahme irgendwelcher Behälter unmittelbar Fleischstücke gebraten werden können.

Schließlich zeigt Fig. 3 im einzelnen, wie durch Form und Positionierung von Kragen 14 und Haubenteil 12 sicher verhindert werden kann, daß Fettspritzer aus dem Innenraum des Haubenteils 12 nach außen gelangen. Eine obere Kante 26 des hochstehenden Randes 20 und eine obere Kante 27 des schrägen Ansatzes 22 definieren die kegelmantelförmige Ebene, die in Fig. 3 als Gerade 28 eingetragen ist. Eine "gerade" Flugbahn durch den Zwischenraum 24 existiert dann nicht, wenn ein unterer Rand 29 des Haubenteiles 12 die Fläche 28 berührt oder schneidet. Allerdings wird der angestrebte Zweck im wesentlichen auch dann erreicht, wenn der Rand 29 einen geringfügigen Abstand von der Ebene 28 hat, weil die Flugbahn eines Fettspritzers immer nach oben gewölbt verläuft.

Fig. 4 zeigt in einer Darstellung wie Fig. 3 für ein Ausführungsbeispiel ähnlich dem von Fig. 2, wie das Haubenteil 12 im Kragen 14 gehalten werden kann.

Hierfür sind Haken 15 von S-förmiger Gestalt vorgesehen, deren oberes Hakenteil 30 den hochstehenden Rand 20 umfaßt, deren unteres Hakenteil 31 den unteren Rand des Haubenteiles 12 umfaßt und der sich in einem mittleren Auflagepunkt 32 am Kragen 14 abstützt.

Die Haken 15 können lose auf den Kragen 14 aufgesetzt, durch Umbiegen des oberen Hakenteils 30 an diese angeklemmt, angeschweißt, angeschraubt, angenietet odgl. sein oder - in kinematischer Umkehr - in entsprechender Weise am unteren Rand des Haubenteiles 12 befestigt sein.

Besonders bevorzugt ist eine Ausführungsform, bei der die Haken 15 fest mit dem Kragen 14 verbunden sind und die unteren Hakenteile 31 eine Form haben, bei der der untere Rand des Haubenteils 12 elastisch in die Haken 15 eingeklipst werden kann. Die Haltekraft der Klipsverbindung muß dabei so groß gewählt sein, daß das Haubenteil 12, beispielsweise mittels des Griffes 11a, zusammen mit dem Kragen 14 gehandhabt werden kann und nur zu Reinigungszwecken gelöst wird.

Weiterhin zeigt Fig. 4, daß unten an das Haubenteil 12 ein zylindrischer Ansatz 33 angesetzt sein kann, der eine definierte Abtropfebene für herunterlaufendes Kondensat darstellt.

Auch an die Unterseite des Bodens 21 des Kragens 14 kann ein zylindrischer Ansatz 34 angesetzt sein, mit dem sicher verhindert wird, daß der Kragen 14 und damit die gesamte Abdeckhaube seitlich von der Pfanne oder dem Topf herunterrutscht. Fig. 4 zeigt den Fall, daß der Durchmesser des zylindrischen Ansatzes 34 gerade mit dem lichten Innendurchmesser der Pfanne übereinstimmt, man erkennt jedoch leicht, daß der Kragen 14 auch auf Pfannen größeren Durchmessers aufgesetzt werden kann, wobei eine Selbstzentrierung durch den konischen Boden 21 erfolgt.

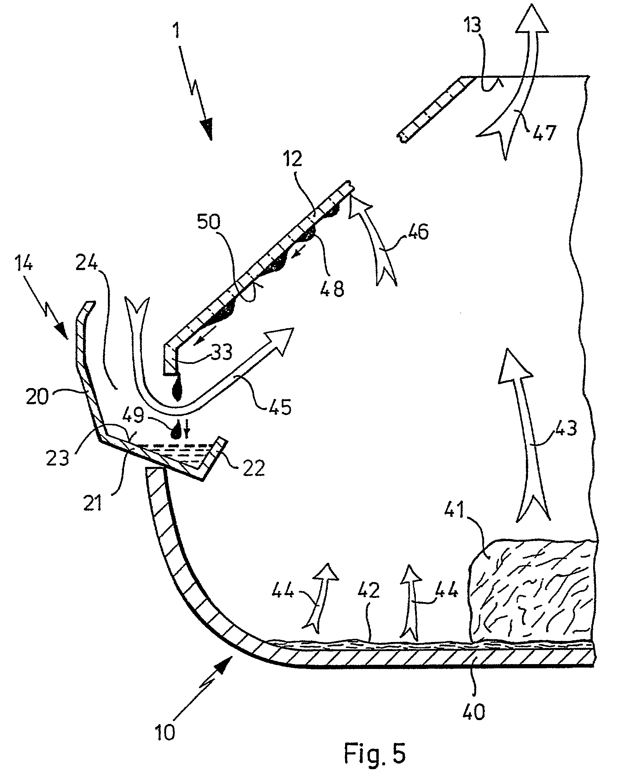

Fig. 5 zeigt die Wirkungsweise der erfindungsgemäßen Abdeckhaube.

Auf einem Boden 40 der Bratpfanne 10 liegt ein Fleischstück 41 in flüssigem Fett 42. Aus dem Fleischstück 41 treten Wrasen 43 aus, die im wesentlichen aus verdampften Wasser und Fleischsaft bestehen. Aus dem Fett 42 treten hingegen Fettspritzer und verdampfendes Fett aus, die mit 44 angedeutet sind. Durch den Zwischenraum 24 zwischen Kragen 14 und Haubenteil 12 tritt Luft 45 in den Innenraum der Pfanne 10 ein und vermengt sich dort mit den aus 43 und 44 gebildeten Wrasen. Ein Teil dieser Wrasen schlägt sich bei 46 an dem von außen gekühlten Haubenteil 12 nieder, während ein weiterer Teil der Wrasen bei 47 durch die Öffnung 13 ins Freie strömt. Die kondensierenden Wrasen 46 laufen als Kondensat 48 an der Unterseite 50 des Haubenteiles 12 nach unten, wo sie an der durch den zylindrischen Ansatz definierten Abtropfkante als Tropfen 49 nach unten in die Rinne 23 gelangen.

Durch die erfindungsgemäße Anordnung wird demzufolge sichergestellt, daß die unerwünschten Dampfbestandteile entweder bei 47 aus der Pfanne entweichen oder aber kontrolliert kondensieren und sich in der Rinne 23 sammeln, so daß die Oberseite des Fleischstücks 41 knusprig gebraten werden kann, ohne auf den Vorteil der schnelleren Garzeit durch eine Abdeckhaube verzichten zu müssen. Man erkennt aus Fig. 5 auch leicht, daß ein Herausspritzen von Fett oder Dampf durch den Zwischenraum 24 ebenso wenig möglich ist, wie ein Herabtropfen des Kondensats 48 in einen Bereich außerhalb der Pfanne 10. Schließlich erkennt man ohne weiteres, daß bei abgenommenem Haubenteil 12 die Rinne 23 einfach von oben zu reinigen ist.

Fig. 6 zeigt eine Variante zur Darstellung von Fig. 5 mit einem zweiteiligen Haubenteil. Die Variante gemäß Fig. 6 kann dazu dienen, um die Anordnung an unterschiedliche Durchmesser der Gerätschaften anzupassen. So ist das Haubenteil in einer waagrechten Ebene 59 in zwei kegelstumpfförmige Teile unterteilt, nämlich ein oberes Haubenteil 12 und ein unteres Haubenteil 12a. Bei unterschiedlichen Durchmessern der Gerätschaften kann immer dasselbe obere Haubenteil 12 verwendet werden und es wird jeweils das passende untere Haubenteil 12a hinzugefügt. Wie sich jedoch aus der weiteren Erläuterung dieses Ausführungsbeispieles ergibt, ergeben sich auch weitere vorteilhafte Wirkungen durch diese Zweiteilung, die den Anwendungsbereich dieses Ausführungsbeispiels nicht nur auf unterschiedliche Durchmesser von Gerätschaften beschränken.

Fig. 6 zeigt, daß die Neigungswinkel der Mantelflächen der Haubenteile 12, 12a denselben Betrag aufweisen, d.h. die Mantelflächen verlaufen zueinander parallel. Allerdings überlappt das obere Haubenteil 12 das untere Haubenteil 12a im Ansetzbereich über eine Länge 1 einer Fallinie, wobei ferner ein Zwischenraum 61 einer Höhe z vorgesehen ist.

Bevorzugt besteht das obere Hauptteil 12 aus einem lichtdurchlässigen Material, beispielsweise Glas, während das untere Haubenteil 12a aus Metall, beispielsweise Kupfer oder Edelstahl besteht. Auf diese Weise ist eine Beobachtung des Bratgutes möglich, ohne daß bei sehr großen Abdeckhauben hohe Kosten durch ganz aus Glas bestehende Haubenteile entstehen.

Zur Lagerung des oberen Haubenteils 12 auf dem unteren Haubenteil 12a dienen Halter 60, von denen beispielsweise drei über den Umfang im Ansetzbereich verteilt sind. Die Halter 60 können beispielsweise als Blechnasen auf das metallene untere Haubenteil 12a aufgeschweißt oder aufgelötet sein.

Wie man aus Fig. 6 deutlich erkennen kann, läuft das Kondensat 48 im Bereich des oberen Haubenteils 12 an dessen Unterseite 50 entlang und tropft an dessen Unterkante 62 in den Zwischenraum 61 und von dort auf die Oberseite 50a des unteren Haubenteils 12a. Auf dieser Oberseite 50a läuft das Kondensat 48b weiter, bis es schließlich unten in Gestalt von Tropfen 49a in die Rinne 23 gelangt.

Das im Bereich des unteren Haubenteiles 12a anfallende Kondensat 48a läuft hingegen an der Unterseite 50b des unteren Haubenteils 12a entlang und tropft schließlich als Tropfen 49 ebenfalls in die Rinne 23.

Auf diese Weise ist sichergestellt, daß für das gesamte anfallende Kondensat 48, 48a, 48b definierte Abtropfwege zur Verfügung stehen, die sämtlich in der Rinne 23 enden, so daß kein Kondensat 48 bis 48b in den Außenbereich der Abdeckhaube gelangen kann. Durch die Überlappung 1, z ist ferner sichergestellt, daß auch keine Fettspritzer zwischen den Haubenteilen 12, 12a hindurch nach außen gelangen können.

Aus Fig. 6 wird ferner ohne weiteres ersichtlich, daß durch den Zwischenraum 61 auch zusätzliche Luftbeiträge von außen unter das obere Haubenteil 12 gelangen können, die die Kaminwirkung der Abdeckhaube insgesamt erhöhen.

**Patentansprüche**

1. Abdeckhaube für Brat- und Kochgerätschaften mit einem Haubenteil (12), bei der die Abdeckhaube von oben in einem auf der Gerätschaft (10, 25) aufsitzenden torusförmigen Kragen (14) angeordnet ist, wobei der Kragen (14) an seiner Außenseite mit einem hochstehenden Rand (20, 20a) und an seiner Unterseite mit einer Rinne (23) versehen ist, wobei das Haubenteil (12) durch Halter im Höhenabstand über der Rinne (23) und im Seitenabstand neben dem hochstehenden Rand (20, 20a) gehalten wird, dadurch gekennzeichnet, daß das Haubenteil (12) kegelstumpfförmig ausgebildet ist, daß die Spitze des Haubenteils (12) eine Öffnung (13) aufweist, daß der Durchmesser (d) der Öffnung (13) kleiner als ein Fünftel und größer als ein Zwanzigstel des Durchmessers (D) des unteren Randes (29) ist, daß

der Neigungswinkel (α) der kegeligen Fläche des Haubenteiles (12) zwischen 35° und 45° liegt, daß das Haubenteil (12) aus einem lichtdurchlässigen Material besteht, und daß das Haubenteil (12) von oben in Haken (15) eingesetzt ist, die S-förmig ausgebildet sind und mit ihrem unteren Hakenteil (31) den unteren Rand (29) des Haubenteils (12) umfassen, wobei die unteren Hakenteile so ausgebildet sind, daß der untere Rand (29) darin einklipsbar ist.

2. Abdeckhaube nach Anspruch 1, dadurch gekennzeichnet, daß die Gerätschaft eine Bratpfanne (10) ist.

3. Abdeckhaube nach Anspruch 1, dadurch gekennzeichnet, daß die Gerätschaft eine Grillplatte (25) ist.

4. Abdeckhaube nach einem der Ansprüche 1 bis 3, dadurch gekennzeichnet, daß der Höhenabstand (y) und der Seitenabstand (x) etwa gleich groß sind und zwischen einem Zehntel und einem Zwanzigstel des Durchmessers des unteren Randes (29) betragen.

5. Abdeckhaube nach einem der Ansprüche 1 bis 4, dadurch gekennzeichnet, daß der Kragen (14) an seiner Unterseite mit einem sich nach unten und nach innen verjüngenden schrägen Boden (21) versehen ist.

6. Abdeckhaube nach Anspruch 5, dadurch gekennzeichnet, daß der schräge Boden (21) die äußere Begrenzung der im Querschnitt im wesentlichen dreieckförmigen Rinne (23) bildet.

7. Abdeckhaube nach einem der Ansprüche 1 bis 6, dadurch gekennzeichnet, daß der Kragen (14) an seiner Unterseite mit einem nach unten weisenden zylindrischen Ansatz (34) versehen ist.

8. Abdeckhaube nach einem der Ansprüche 1 bis 7, dadurch gekennzeichnet, daß der untere Rand des Haubenteiles (12) durch einen sich vom Rand des kegelförmigen Abschnittes nach unten erstreckenden zylindrischen Ansatz (33) gebildet wird.

9. Abdeckhaube nach einem der Ansprüche 1 bis 8, dadurch gekennzeichnet, daß die von der oberen Kante (26) des hochstehenden Randes (20, 20a) und der oberen, inneren Kante (27) der Rinne (23) definierte kegelförmige Fläche (28) vom unteren Rand (29) des Haubenteils (12) berührt oder geschnitten wird.

10. Abdeckhaube nach einem der Ansprüche 1 bis 9, dadurch gekennzeichnet, daß für unterschiedliche Durchmesser der Gerätschaften unterschiedliche Kragen (14) mit entsprechendem Durchmesser vorgesehen sind, deren Rinnen (23) und Halter so ausgebildet sind, daß auf alle Kragen (14) dasselbe Haubenteil (12) aufsetzbar ist.

11. Abdeckhaube nach einem der Ansprüche 1 bis 10, dadurch gekennzeichnet, daß für unterschiedliche Durchmesser der Gerätschaften das Haubenteil (12) in einer waagerechten Ebene (59) unterteilt ist, wobei an ein oberes Haubenteil (12) gleichbleibender Größe ein kegelstumpfförmiges, unteres Haubenteil (12a) angesetzt ist, dessen Bodendurchmesser dem jeweiligen Durchmesser der Gerätschaft entspricht.

12. Abdeckhaube nach Anspruch 11, dadurch gekennzeichnet, daß die Neigungswinkel (α) der Mantelflächen beider Haubenteile (12, 12a) gleich sind.

13. Abdeckhaube nach Anspruch 11 oder 12, dadurch gekennzeichnet, daß das obere Haubenteil (12) aus einem lichtdurchlässigen Material und das untere Haubenteil (12a) aus Metall, vorzugsweise Kupfer oder Edelstahl, besteht.

14. Abdeckhaube nach einem der Ansprüche 11 bis 13, dadurch gekennzeichnet, daß das obere Haubenteil (12) im Ansetzbereich des unteren Haubenteils (12a) über eine vorbestimmte Länge (l) einer Fallinie überlappt, wobei die Haubenteile (12, 12a) im Überlappungsbereich einen Zwischenraum (61) vorbestimmter Höhe (z) zwischen sich aufweisen.

15. Abdeckhaube nach einem der Ansprüche 1 bis 14, dadurch gekennzeichnet, daß das Haubenteil (12, 12a) und/oder der Kragen (14) mit einem Griff (11a, 11b) versehen sind.

**Revendications**

1. Couvercle pour récipients de cuisson et à griller avec une partie de couvercle (12), selon lequel le couvercle est disposé par en dessus dans une collerette torique (14) reposant sur le récipient (10, 25), la collerette (14) étant munie sur son côté extérieur d'un rebord en saillie vers le haut (20, 20a) et sur son côté inférieur d'une rigole (23), la partie de couvercle (12) étant maintenue par des éléments de fixation à distance verticale au-dessus de la rigole (23) et à distance latérale à côté du rebord en saillie vers le haut (20, 20a), caractérisé en ce que la partie de couvercle (12) est configurée en forme tronconique, en ce que le sommet de la partie de couvercle (12) présente une ouverture (13), en ce que le diamètre (d) de l'ouverture (13) est inférieur à un cinquième et supérieur à un vingtième du diamètre (D) du bord inférieur (29), en ce que l'angle d'inclinaison (α) de la face conique de la partie de couvercle (12) est compris entre 35° et 45°, en ce que la partie de couvercle (12) est réalisée en un matériau transparent, et en ce que la partie de couvercle (12) est insérée par dessus dans des crochets (15) qui sont configurés en forme de S et qui enserrent par leur partie de crochet inférieure (31) le bord inférieur (29) de la partie de couvercle (12), les parties de crochets inférieures étant configurées de telle sorte que le bord inférieur (29) peut être enclipsé dans ces dernières.

2. Couvercle selon la revendication 1, caractérisé en ce que le récipient est une poêle (10).

3. Couvercle selon la revendication 1, caractérisé en ce que le récipient est une plaque de gril (25).

4. Couvercle selon l'une des revendications 1 à 3, caractérisé en ce que la distance verticale (y) et la distance latérale (x) sont approximativement égales, et sont égales à entre un dixième et un vingtième du diamètre du bord inférieur (29).

5. Couvercle selon l'une des revendications 1 à 4, caractérisé en ce que la collerette (14) est munie sur son côté inférieur d'un fond oblique (21) qui se rétrécit vers le dessous et vers l'intérieur.

6. Couvercle selon la revendication 5, caractérisé en ce que le fond oblique (21) forme la délimitation extérieure de la rigole (23) de section essentiellement triangulaire.

7. Couvercle selon l'une des revendications 1 à 6, caractérisé en ce que la collerette (14) est munie sur son côté inférieur d'un élément rapporté cylindrique (34) dirigé vers le bas.

8. Couvercle selon l'une des revendications 1 à 7, caractérisé en ce que le bord inférieur de la partie de couvercle (12) est formé par un élément rapporté cylindrique (33) s'étendant vers le bas à partir du bord de la partie conique.

9. Couvercle selon l'une des revendications 1 à 8, caractérisé en ce que la face conique (28) définie par l'arête supérieure (26) du rebord en saillie vers le haut (20, 20a) et l'arête supérieure intérieure (27) de la rigole (23), est touchée ou coupée par le bord inférieur (29) de la partie de couvercle (12).

10. Couvercle selon l'une des revendications 1 à 9, caractérisé en ce que des collerettes (14) différentes, de diamètres correspondants, sont prévues pour des diamètres différents de récipients, collerettes dont les rigoles (23) et les éléments de fixation sont configurés de telle sorte que la même partie de couvercle (12) peut être installée sur toutes les collerettes (14).

11. Couvercle selon l'une des revendications 1 à 10, caractérisé en ce que, pour des diamètres différents de récipients, la partie de couvercle (12) est subdivisée dans un plan horizontal (59), et une partie de couvercle inférieure tronconique (12a), dont le diamètre du fond correspond au diamètre respectif du récipient, est rapportée sur une partie de couvercle supérieure (12) de grandeur constante.

12. Couvercle selon la revendication 11, caractérisé en ce que les angles d'inclinaison (α) des faces d'enveloppes des deux parties de couvercle (12, 12a) sont identiques.

13. Couvercle selon la revendication 11 ou 12, caractérisé en ce que la partie de couvercle supérieure (12) est réalisée en un matériau transparent, et la partie de couvercle inférieure (12a) en métal, de préférence cuivre ou acier spécial.

14. Couvercle selon l'une des revendications 11 à 13, caractérisé en ce que la partie de couvercle supérieure (12) recouvre, dans la région d'assemblage de la partie de couvercle inférieure (12a) et sur une longueur prédéterminée (1), une ligne de plus grande pente, les parties de couvercle (12, 12a) présentant entre elles dans la région de recouvrement un espace intermédiaire (61) de hauteur (z) prédéterminée.

15. Couvercle selon l'une des revendications 1 à 14, caractérisé en ce que la partie de couvercle (12, 12a) et/ou la collerette (14) sont munies d'une poignée (11a, 11b).

## Claims

1. A cover for frying and cooking appliances, comprising a hood portion (12), said cover is disposed from above within a toroidal collar (14) resting on said appliance (10, 25), said collar (14) being provided with an upwardly extending rim (20, 20a) on its outside and with a channel (23) on its bottom side, said hood portion (12) is retained by holders at a vertical distance above the channel (23) and at a lateral distance beside the upwardly extending rim (20, 20a), characterized in that the hood portion (12) is in the form of a truncated cone, the vertex of the hood portion (12) is provided with an opening (13), the diameter (d) of the opening (13) is smaller than one fifth and larger than one twentieth of the diameter (D) of the lower rim (29), the angle (α) of inclination of the conical surface of the hood portion (12) is between 35 degrees and 45 degrees, said hood portion (12) is made from a transparent material, and in that the hood portion (12) is seated from above in S-shaped hooks (15) embracing with its lower hook portion (31) the lower rim (29) of the hood portion (12), said lower hook portions are designed in such a manner that the lower rim (29) can be snapped into place.

2. A cover according to claim 1, characterized in that the appliance is a frying pan (10).

3. A cover according to claim 1, characterized in that the appliance is a grill plate (25).

4. A cover according to any of claims 1 through 3, characterized in that the vertical distance (y) and the lateral distance (x) are approximately equal and between one tenth and one twentieth of the diameter of the lower rim (29).

5. A cover according to any of claims 1 through 4, characterized in that the collar (14) is provided at its bottom side with an inclined bottom (21) tapering downwardly and inwardly.

6. A cover according to claim 5, characterized in that the inclined bottom (21) forms the outer delimitation of the channel (23) which exhibits a substantially triangular cross-sectional shape.

7. A cover according to any of claims 1 through 6, characterized in that the collar (14) is provided at its bottom side with a downwardly protecting cylindrical extension (34).

8. A cover according to any of claims 1 through 7, characterized in that the lower rim of the hood portion (12) is formed by a cylindrical extension (33) projecting downwardly from the edge of the conical portion.

9. A cover according to any of claims 1 through 8, characterized in that the conical surface (28) defined by the upper edge (26) of said upwardly extending rim (20, 20a) and the upper, inner edge (27) of the channel (23) are touched or intersected by the lower rim (29) of the hood portion (12).

10. A cover according to any of claims 1 through 9, characterized in that different collars (14) with suitable diameters are provided for appliances of different diameters, the channels (23) and holders of which are designed in such a manner that the same hood portion (12) can be fitted on all collars (14).

11. A cover according to any of claims 1 through 10, characterized in that the hood portion (12), if it is to fit different diameters of appliances, is subdivided along a horizontal plane (59), with an upper hood portion (12) of constant size being followed in this case by a lower hood portion (12a) in the form of a truncated cone, the bottom diameter of which latter corresponds to the diameter of the respective appliance.

12. A cover according to claim 11, characterized in that the angle (α) of inclination of the generated surfaces of both hood portions (12, 12a) are identical.

13. A cover according to claim 11 or 12, characterized in that the upper hood section (12) is made from a transparent material, while the lower hood portion (12a) consists of metal, preferably of copper or stainless steel.

14. A cover according to any of claims 11 through 13, characterized in that the upper hood portion (12) is designed to overlap the lower hood portion (12a) in the contacting area by a predetermined length (1) of the line of slope, thereby forming a gap (61) of a predetermined height (z) between the two hood portions (12, 12a) in the overlapping area.

15. A cover according to any of claims 1 through 14, characterized in that the hood portion (12, 12a) and/or the collar (14) are provided with a handle (11a, 11b).

Fig. 1

EP 0 192 163 B1

Fig. 2

Fig. 3

Fig. 4

Fig. 5

Fig. 6